# EUROPÄISCHE PATENTANMELDUNG

(11) **EP 0 553 620 A1**
(43) Veröffentlichungstag der Anmeldung: **04.08.1993**
(21) Anmeldenummer: 93100194.5
(22) Anmeldetag: 08.01.1993
(51) Int. Cl.: C08J 3/03, C08L 33/00

(54) **Kontinuierliches Verfahren zur Herstellung wässriger Polyacrylat-Sekundärdispersionen**

(30) Priorität: 28.01.1992 DE 4202212
(71) Anmelder: BASF Aktiengesellschaft, D-67063 Ludwigshafen (DE)
(72) Erfinder: Schiessl, Michael, W-6701 Altrip (DE); Schlarb, Bernhard, Dr., W-6700 Ludwigshafen (DE); Hoffmann, Helmut, W-6701 Dannstadt-Schauernheim (DE); Schwarzenbach, Elmar, Dr., W-6725 Roemerberg (DE)

(57) **Zusammenfassung**

Kontinuierliches Verfahren zur Herstellung wäßriger Polyacrylat-Sekundärdispersionen hoher Lagerstabilität auf Basis von Polyacrylatharzsystemen mittels intensiv dispergierender Schneckenmaschinen, wobei die Herstellung der Sekundärdispersionen nach der Neutralisation der lösungsmittelfreien Copolymerisatschmelze bzw. des gelösten Copolymerisats in dem Scherteil einer Schneckenmaschine durchgeführt wird, und
- der spezifische Energieeintrag 0,001 - 0,25 kWh/kg
- die Verweilzeit im Scherfeld 0,1 - 120 sec, und
- das Schergefälle 1000 - 12000 1/sec
beträgt.

## Beschreibung

Die Erfindung betrifft ein kontinuierliches Verfahren zur Herstellung wäßriger Polyacrylat-Sekundärdispersionen hoher Lagerstabilität auf Basis von Polyacrylatharzsystemen mittels intensiv dispergierender Schneckenmaschinen.

Als Harze werden vorzugsweise selbstemulgierende Polyacrylate eingesetzt. Die Systeme sind durch den Gehalt an hydrophilen Gruppen selbstemulgierend. Bei diesen hydrophilen Gruppen handelt es sich vorzugsweise um Säuregruppen, die nach der Neutralisation und der Salzbildung die Emulgierbarkeit des Polymeren in Wasser bewirken. Die Polyacrylate werden durch radikalische Lösungscopolymerisation von (Meth)acrylaten und eventuell Vinylaromaten hergestellt. Besonders bevorzugte Monomeren sind: Acrylsäure, n-Butylacrylat, Methylmethacrylat, Hydroxyethylmethacrylat und Styrol. Bei den zu dispergierenden, selbstemulgierenden Harzen kann es sich um acrylsäurehaltige Copolymerisate, die beispielsweise in der DE-AS 25 07 842 beschrieben sind, handeln. Besonders bevorzugt sind Mischungen zweier Copolymerisate von denen nur eines der beiden Copolymerisate Säuregruppen tragende Monomere als Comonomer-Baustein enthält. Diese Säuregruppen sind nach dem Neutralisationsschritt für die Dispergierbarkeit der Copolymerisatmischung von entscheidender Bedeutung. Diese Systeme sind in der EP 225 612 beschrieben.

Die Säurezahl typischer Copolymerisat-Mischungen beträgt 12 bis 35. Die Molekulargewichte (MW) liegen typischerweise in der Größenordnung von 70.000 bis 100.000. Die Copolymerisate werden in organischen Lösemitteln durch radikalische Polymerisation erhalten. Ein bevorzugtes Lösemittel ist Isobutanol. Die Feststoffgehalte der Lösungspolymerisate liegen typischerweise zwischen 70 und 85 Gew.-%. Die Viskositäten der lösemittelhaltigen Systeme liegen in der Größenordnung von 40 Pas bei einer Temperatur von 90⁰C. Die Schmelzviskositäten der Lösemittelfreien Polymeren liegen zwischen 100 und 10.000 Pas bei einer Temperatur von 120°C. Als Neutralisationsmittel dient vorzugsweise wäßriger Ammoniak. Die Ammoniak-Konzentration kann dabei bevorzugt zwischen 5 und 25 Gew. -% liegen. Neben Ammoniak sind auch organische Amine beispielsweise Triethylamin, Dimethylethanolamin etc. geeignet.

Die Stabilisierung der Dispersion erfolgt durch die Carboxylatgruppen, die sich an der Oberfläche der Latexteilchen befinden. Derartige Sekundärdispersionen sind frei von Emulgatoren oder Schutzkolloiden. Deshalb sind mit diesen Systemen Filmeigenschaften erreichbar, beispielsweise eine hohe Wasserfestigkeit, die mit Emulsionspolymerisaten (Primärdispersionen) nicht zu verwirklichen sind.

Nach dem Stand der Technik werden wäßrige Polyacrylat-Sekundärdispersionen aus Copolymerisat-Lösungen über die Verfahrensschritte
1) Neutralisation saurer beziehungsweise basischer Gruppen mit Basen oder Säuren
2) Dispergierung des gelösten Polymerisats in Wasser
3) Abdestillation des organischen Lösungsmittels
hergestellt.

Üblicherweise werden diese Verfahrensschritte in Rührkesseln durchgeführt und sind ebenfalls in der EP 225 612 beschrieben. Die Abdestillation des organischen Lösungsmittels kann im Rührkessel erst nach der Dispergierung des Polymerisats erfolgen, da die Viskosität der Polymerisate ohne das Lösungsmittel zu hoch wäre, um sie in einem Rührkessel dispergieren zu können. Ein Nachteil dieser Verfahrensweise liegt darin, daß Wasser mit dem organischen Lösungsmittel abdampft und somit die Energiekosten erhöht werden. Die Zykluszeit zur Herstellung der Dispersion verlängert sich dadurch ebenfalls. Der gravierendste Nachteil dieses Verfahrens ist jedoch der aufwendige Destillationsschritt zur Abtrennung des Wassers vom organischen Lösungsmittel, der bei der Aufarbeitung des Destillats erforderlich ist.

Nach DE-OS 39 11 945 kann bei einigen Haftklebstoff-Sekundärdispersionen die Abtrennung des organischen Lösungsmittels aus dem Polymerharz vor dem Dispergiervorgang im Rührkessel erfolgen. Diese Polymerharze sind durch ein niedriges Molekulargewicht und eine geringe Glastemperatur gekennzeichnet. Aufgrund der hohen Viskosität der erfindungsgemäßen Polyacrylatharze ist diese Vorgehensweise nicht möglich.

Die EP 384 165 beschreibt ein kontinuierliches Verfahren zur Herstellung wäßriger, nicht selbstemulgierender Polymerdispersionen aus hochviskosen Reaktionsharzen. Bei der Herstellung dieser Dispersion ist jedoch der Zusatz von Tensiden oder Schutzkolloiden notwendig, da diese Systeme nicht selbstemulgierend sind. Eine Neutralisierung funktioneller Gruppen entfällt daher.

Im Gegensatz zu dem in EP 384 165 beschriebenen Verfahren werden im erfindungsgemäßen Verfahren selbstemulgierende Systeme eingesetzt.

Von entscheidender Bedeutung für die Herstellung einer erfindungsgemäßen Polyacrylat-Sekundärdispersion ist die Neutralisation der sauren bzw. basischen Gruppen vor dem Dispergierschritt mit Wasser.

Die neutralisierten Carboxylatgruppen führen im Dispergierschritt zu einer stabilen, typgerechten Dispersion. Die Herstellung einer typgerechten Dispersion durch einen hohen und intensiven Energieeintrag ist ohne vorherige Neutralisation nicht zu erreichen.

Der Zusatz von Tensiden oder Schutzkolloiden ist im Gegensatz zu EP 384 165 für die erfindungsgemäßen Polyacrylat-Sekundärdispersionen nicht erforderlich.

In DE 38 30 535 wird die kontinuierliche Herstellung von wäßrigen Synthesewachsdispersionen beschrieben. Die Neutralisation der lösungsmittelfreien Copolymerisatschmelze kann im erfindungsgemäßen Verfahren ebenfalls in einem Zweischneckenextruder durchgeführt werden. Überraschenderweise sind jedoch alle dort aufgeführten Extrudertypen nicht für die Dispergierung der neutralisierten, lösungsmittelfreien Copolymerisatschmelze geeignet, da die Dispergierung nicht intensiv genug ist. Die Dispergierung muß vielmehr im intensiv mischenden Scherteil (Rotor/Stator) einer Schneckenmaschine durchgeführt werden.

Es stellte sich daher die Aufgabe, ein kontinuierliches Verfahren zur Herstellung von wäßrigen Polyacrylat-Sekundärdispersionen hoher Lagerstabilität zu entwickeln.

Diese Aufgabe wird erfindungsgemäß dadurch gelöst, daß die Herstellung der Sekundärdispersionen nach der Neutralisation der lösungsmittelfreien Copolymerisatschmelze bzw. des gelösten Copolymerisats in dem Scherteil einer Schneckenmaschine durchgeführt wird, und
- der spezifische Energieeintrag 0,001 - 0,25 kWh/kg
- die Verweilzeit im Scherfeld 0,1 - 120 sec, und
- das Schergefälle 1000 - 12000 1/sec
beträgt.

Die Verweilzeit im Scherfeld liegt vorzugsweise zwischen 0,5 s und 2 s; der spezifische Energieeintrag vorzugsweise im Bereich 0,001 - 0,2 kWh/kg. Ein spezifischer Energieeintrag über 0,25 kWh/kg führt zu Produktschädigungen, ein Energieeintrag unter 0,001 kWh/kg zu einer nicht ausreichenden Dispergierung.

Vor dem Dispergieren mit Wasser ist die Neutralisation saurer beziehungsweise basischer Gruppen der Copolymerisatschmelze durchzuführen.

Diese Neutralisation wird erfindungsgemäß derart durchgeführt, daß der Copolymerisatschmelze auf einem selbstreinigenden Zweischneckenextruder, beispielsweise einer ZSK (Fa. Werner & Pfleiderer), wäßrige Ammoniaklösung zudosiert und mit der Copolymerisatschmelze in einer Mischzone vermischt wird.

Als Mischzone können vorteilhaft Knetelemente eingesetzt werden, wobei
- der spezifische Energieeintrag 0,005 - 0,05 kWh/kg
- die Verweilzeit in der Mischzone 0,1 - 60 sec
beträgt.

Alternativ kann die Neutralisation auch in dem Scherteil einer Schneckenmaschine durchgeführt werden.

Dieser Neutralisationsschritt ist von entscheidender Bedeutung, um im späteren Dispergierschritt stabile, typgerechte Dispersionen herstellen zu können.

Die nach diesem neutentwickelten Verfahren hergestellten Sekundärdispersionen sind stippenfrei und zeichnen sich durch eine hohe Lagerstabilität sowie eine typgerechte Teilchengrößenverteilung aus.

Dies führt zu qualitativ hochwertigen Polyacrylat-Sekundärdispersionen.

Ein Ziel der vorliegenden Erfindung war es, die lösungsmittelfreie Copolymerisatschmelze zu dispergieren, um das aufwendige Destillationsverfahren zur Wasserabtrennung aus dem organischen Lösungsmittel einzusparen.

Dieses Ziel wird dadurch erreicht, daß aus der lösungsmittelhaltigen Copolymerisat-Lösung zunächst das Lösungsmittel abdestilliert wird. Dabei kann ein Teil des Lösungsmittels bereits im Rührkessel nach der Polymerisation entfernt werden. Die weitere Lösungsmittelentfernung ist Stand der Technik und kann beispielsweise in einem Stopfenrohrentgaser oder in einem Zweischneckenextruder durchgeführt werden.

Von Vorteil ist, in einem Entgasungsschritt nach der Dispergierung einen Teil des vorzugsweise zur Neutralisation eingesetzten Ammoniaks aus der Dispersion zu entfernen. Dies führt zu deutlich niederviskoseren Dispersionen. Der Entgasungsschritt ist Stand der Technik und kann beispielsweise in einem Fryma-Vakuumentlüfter, einem Fallfilmverdampfer, einem Zweischneckenextruder oder in einem Rührkessel mit Strippvorrichtung durchgeführt werden.

Eine für das Verfahren gemäß der vorliegenden Erfindung vorteilhaft verwendbare Vorrichtung zeigt das Verfahrensfließbild.

Die hochviskose Copolymerisat-Lösung wird im Kessel 1 bevorratet, dabei kann der Lösungsmittelgehalt dem zur Polymerisation notwendigen Lösungsmittelgehalt entsprechen beziehungsweise schon in einer vorhergegangenen Strippoperation, die nach dem Stand der Technik hinreichend bekannt ist, reduziert worden sein.

Um die Fließfähigkeit der Copolymerisat-Lösung zu gewährleisten, kann der Kessel 1 beheizt werden. Zwischen Kessel 1 und der Zahnradpumpe 3 ist ein Absperrventil 2 angebracht. Die Copolymerisat-Lösung wird über die Zahnradpumpe des temperierbaren Zweischneckenextruders 14 zudosiert, der durch einen Elektromotor 10 angetrieben wird. Der erste Teil der Schneckenmaschine 11 dient als Druckaufbauzone, im zweiten Schneckenteil 12 wird das restliche Lösungsmittel aus der Copolymerisat-Lösung durch ein angelegtes Vakuum 4 entgast. Das Lösungsmittel kann in der Kühlfalle 5 aufgefangen werden. Das Ventil 6 dient als Ablaufventil für die Kühlfalle 5.

Im Kessel 7 wird die wäßrige Ammoniaklösung zur Neutralisation der Carboxylatgruppen bevorratet. Die Ammoniaklösung mit einer Ammoniak-konzentration von vorzugsweise 5 - 25 Gew.-% Ammoniak, kann über die Kolbenpumpe 9 dem Zweischneckenextruder zudosiert werden. Der Schneckenteil 13, mit Knetelementen bestückt, dient als Mischzone der lösungsmittelfreien Copolymerisatschmelze mit der wäßrigen Ammoniaklösung und damit deren Neutralisation. Außerdem arbeitet die Schneckenzone 13 als Druckaufbauzone, um die neutralisierte, lösungsmittelfreie Copolymerisatschmelze in die Schneckenmaschine 26 zu dosieren.

Als schneckenmaschine 26 mit Scherteil kann eine hochtourig drehende Einschneckenmaschine, die von einem Elektromotor 21 angetrieben wird, verwendet werden.

Die Schneckenmaschine kann über einen Doppelmantel mit Kühl-Heizmedien 27 temperiert werden.

Im ersten Teil der Schneckenmaschine 22 wird die lösungsmittelfreie, neutralisierte Copolymerisatschmelze zudosiert. Dieser Schneckenteil ist mit Förderschnecken bestückt, die die Copolymerisatschmelze in die Dispergierzonen 23 und 24 fördern. Die Dispergierung findet in den Dispergierzonen 23 und 24 durch Wasserzugabe statt. Die zweifache Wasserzugabe ist vorteilhaft; die Wasserzugabe an nur einer Stelle kann zur Stippenbildung führen.

Das VE-Wasser wird in den Kesseln 15 beziehungsweise 18 bevorratet; zur Temperierung des VE-Wassers sind die Kessel beheizbar. Die Ventile 16 und 19 dienen als Absperrorgane. Die Dosierung des VE-Wassers erfolgt durch die Kolbenpumpen 17 und 20.

Die Dispergierzonen 23 und 24 müssen als dispergierende Mischzonen mit enger Schergeschwindigkeitsverteilung aufgebaut sein, um die benötigte Dispergierzeit zu minimieren.

Die Dispergierzonen 23 und 24 müssen so gestaltet werden, daß ein spezifischer Energieeintrag von 0,001 kWh/kg bis 0,25 kWh/kg, ein Schergefälle von 1000 sec⁻¹ bis 12000 sec⁻¹ und eine Verweilzeit von 0,1 s bis 120 s eingestellt werden kann. Größere spezifische Energien als 0,25 kWh/kg führen zu Produktschädigungen, ein Energieeintrag unter 0,001 kWh/kg zu einer nicht ausreichenden Dispergierung.

Vorteilhaft können Rotor/Stator-Systeme mit engen Spaltweiten verwendet werden.

Mit den Förderschnecken im Schneckenteil 25 wird die wäßrige Polyacrylat-Senkundärdispersion 28 kontinuierlich aus der Schneckenmaschine ausgetragen.

### Beispiel 1

Eine Copolymerisat-Lösung gemäß Beispiel 2 aus EP 225 612 mit einem Lösungsmittelgehalt von 23 % wird mit einer Zahnradpumpe dem Zweischneckenextruder (ZSK) zudosiert.

Dabei wird ein Massenstrom an Copolymerisatlösung von 20,9 kg/h eingestellt.

Im Entgasungsgehäuse der ZSK wird bei einer Temperatur von 120°C das Lösungsmittel (Isobutanol) vollständig abgedampft und in einer Kühlfalle aufgefangen.

Im weiteren Verlauf der ZSK wird 2,1 %ige wäßrige Ammoniaklösung über eine Kolbenpumpe zugegeben, um das lösungsmittelfreie Copolymerisat vollständig zu neutralisieren.

Der eingestellte Massenstrom Ammoniaklösung beträgt 4 kg/h.

In der Mischzone der ZSK, die mit Knetelementen bestückt ist, beträgt die Verweilzeit im Scherfeld 21 s und der spezifische Energieeintrag 0,01 kWh/kg.

Aus der ZSK wird das lösungsmittelfreie, neutralisierte Copolymerisat mit einer Temperatur von 80°C der hochtourig drehenden Einschneckenmaschine zudosiert.

Die Drehzahl beträgt 1000 UpM.

In der Einschneckenmaschine werden zwei Dispergierstufen mit Rotor/Statoren eingesetzt, um stufenweise auf 80°C temperiertes VE-Wasser zuzugeben.

Der eingestellte Massenstrom beträgt 8 kg/h an der ersten Wasserzugabestelle und 8,4 kg/h an der zweiten Wasserzugabestelle.

Das Schergefälle im Rotor/Stator mit einer Spaltweite von 0,5 mm beträgt 5500 s⁻¹, die Verweilzeit im Scherfeld des Rotors/Stators ist 11 s und der spezifische Energieeintrag 0,03 kWh/kg.

Kenndaten der Dispersion siehe Tabelle 1, Spalte 1. Die Viskosität der Dispersion kann durch eine nachgeschaltete NH₃-Entgasung erniedrigt werden.

### Beispiel 2

Eine Copolymerisat-Lösung gemäß Beispiel 2 aus EP 225 612 mit einem Lösungsmittelgehalt von 23 % wird mit einer Zahnradpumpe dem Zweischneckenextruder (ZSK) zudosiert.

Dabei wird ein Massenstrom an Copolymerisatlösung von 20,2 kg/h eingestellt.

Im Entgasungsgehäuse der ZSK wird bei einer Temperatur von 120°C das Lösungsmittel (Isobutanol) vollständig abgedampft und in einer Kühlfalle aufgefangen.

Aus der ZSK wird das lösungsmittelfreie Copolymerisat mit einer Temperatur von 80°C der hochtourig drehenden Einschneckenmaschine zudosiert.

Die Drehzahl der Einschneckenmaschine beträgt 800 UpM.

In der Einschneckenmaschine werden drei Dispergierstufen mit Rotor/Statoren eingesetzt, um zunächst den Neutralisationsschritt durchzuführen und anschließend stufenweise auf 60°C temperiertes VE-Wasser zuzugeben.

In die erste Dispergierstufe der Einschneckenmaschine wird 4,3 %ige wäßrige Ammoniaklösung über eine Kolbenpumpe zugegeben, um das lösungsmittelfreie Copolymerisat vollständig zu neutralisieren.

Der eingestellte Massenstrom Ammoniaklösung beträgt 2,1 kg/h.

Die Verweilzeit in der Neutralisationszone der Einschneckenmaschine beträgt 24 s.

In den folgenden zwei Dispergierstufen wird schrittweise VE-Wasser zugegeben. Der Massenstrom wird auf 8 kg/h an der ersten Wasserzugabestelle und 10 kg/h an der zweiten Wasserzugabestelle eingestellt.

Das Schergefälle im Rotor/Stator mit einer Spaltweise von 0,5 mm beträgt 4400 s⁻¹,die Verweilzeit im Scherfeld des Rotor/Stators ist 15 s und der spezifische Energieeintrag 0,1 kWh/kg.

Kenndaten der Dispersion siehe Tabelle 1, Spalte 2.

Die Viskosität der Dispersion kann durch eine nachgeschaltete NH₃-Entgasung erniedrigt werden.

### Beispiel 3

Eine Copolymerisat-Lösung gemäß Beispiel 2 aus EP-A 225 612 mit einem Lösungsmittelgehalt von 23 % wird mit einer Zahnradpumpe dem Zweischneckenextruder (ZSK) zudosiert.

Dabei wird ein Massenstrom an Copolymerisat-Lösung von 20,2 kg/h eingestellt.

Im Entgasungsgehäuse der ZSK wird die Copolymerisat-Lösung bei einer Temperatur von 120°C auf einen Lösungsmittelgehalt von 12 Gew.-% aufkonzentriert.

Aus der ZSK wird die aufkonzentrierte Copolymerisat-Lösung bei einer Temperatur von 120°C der hochtourig drehenden Einschneckenmaschine zudosiert.

Die Drehzahl der Einschneckenmaschine beträgt 1000 UpM.

In der Einschneckenmaschine werden drei Dispergierstufen mit Rotor/Statoren eingesetzt, um zunächst den Neutralisationsschritt durchzuführen und anschließend stufenweise auf 60°C temperiertes VE-Wasser zuzugeben.

In die erste Dispergierstufe der Einschneckenmaschine wird 4,3 %ige wäßrige Ammoniaklösung über eine Kolbenpumpe zugegeben, um das lösungsmittelfreie Copolymerisat vollständig zu neutralisieren.

Der eingestellte Massenstrom Ammoniaklösung beträgt 2,1 kg/h.

Die Verweilzeit in der Neutralisationszone der Einschneckenmaschine beträgt 20 s.

In den folgenden zwei Dispergierstufen wird schrittweise VE-Wasser zugegeben. Der Massenstrom wird auf 8 kg/h an der ersten Wasserzugabestelle und 10 kg/h an der zweiten Wasserzugabestelle eingestellt.

Das Schergefälle im Rotor/Stator mit einer Spaltweise von 0,5 mm beträgt 5500 s⁻¹, die Verweilzeit im Scherfeld des Rotor/Stators ist 14 s und der spezifische Energieeintrag 0,06 kWh/kg.

Kenndaten der Dispersion siehe Tabelle 1, Spalte 3.

### Beispiel 4

Eine auf 80°C temperierte Copolymerisat-Lösung gemäß Beispiel 2 aus EP-A 225 612 mit einem Lösungsmittelgehalt von 23 % wird mit einer Zahnradpumpe der Einschneckenmaschine (ZSK) zudosiert.

Die Drehzahl der Einschneckenmaschine beträgt 1000 UpM.

In der Einschneckenmaschine werden drei Dispergierstufen mit Rotor/Statoren eingesetzt, um zunächst den Neutralisationsschritt durchzuführen und anschließend stufenweise auf 60°C temperiertes VE-Wasser zuzugeben.

In die erste Dispergierstufe der Einschneckenmaschine wird 4,3 %ige wäßrige Ammoniaklösung über eine Kolbenpumpe zugegeben, um die Copolymerisat-Lösung vollständig zu neutralisieren.

Der eingestellte Massenstrom Ammoniaklösung beträgt 2,1 kg/h.

Die Verweilzeit in der Neutralisationszone der Einschneckenmaschine beträgt 19 s.

In den folgenden zwei Dispergierstufen wird schrittweise VE-Wasser zugegeben. Der Massenstrom wird auf 8 kg/h an der ersten Wasserzugabestelle und 10 kg/h an der zweiten Wasserzugabestelle eingestellt.

Das Schergefälle im Rotor/Stator mit einer Spaltweise von 0,5 mm beträgt 5500 s⁻¹, die Verweilzeit im Scherfeld des Rotor/Stators ist 13 s und der spezifische Energieeintrag 0,01 kWh/kg.

Kenndaten der Dispersion siehe Tabelle 1, Spalte 4.

**Tabelle 1**

| Kenndaten der Dispersionen aus den Beispielen 1 bis 4: | | | | |
|---|---|---|---|---|
| Beispiel-Nr. | 1 | 2 | 3 | 4 |
| Feststoffgehalt (Gew.-%) | 43,2 | 41,9 | 40,3 | 38,4 |
| pH | 9,4 | 9,5 | 9,5 | 9,3 |
| LD-Wert | 56 | 49 | 61 | 76 |
| Isobutanol-Gehalt (Gew.-%) | 0,4 | 0,4 | 4,9 | 12,6 |
| Viskosität [mPas] | 42.000 | pastös | 900 | 4.000 |

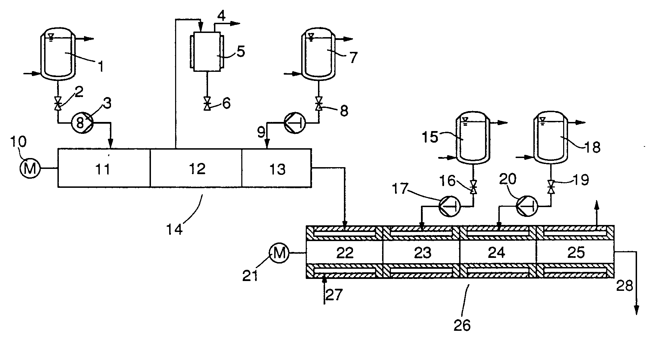

## Patentansprüche

1. Kontinuierliches Verfahren zur Herstellung wäßriger Polyacrylat-Sekundärdispersionen hoher Lagerstabilität auf Basis von Polyacrylatharzsystemen mittels intensiv dispergierender Schneckenmaschinen, dadurch gekennzeichnet, daß die Herstellung der Sekundärdispersionen nach der Neutralisation der lösungsmittelfreien Copolymerisatschmelze bzw. des gelösten Copolymerisats in dem Scherteil einer Schneckenmaschine durchgeführt wird, und
- der spezifische Energieeintrag 0,001 - 0,25 kWh/kg
- die Verweilzeit im Scherfeld 0,1 - 120 sec, und
- das Schergefälle 1000 - 12000 1/sec
beträgt.

2. Verfahren nach Anspruch 1, dadurch gekennzeichnet, daß vor dem Dispergierschritt mit Wasser die Neutralisation saurer beziehungsweise basischer Gruppen der Copolymerisatschmelze erfolgt.

3. Verfahren nach den Ansprüchen 1 und 2, dadurch gekennzeichnet, daß die Neutralisation der lösungsmittelfreien Copolymerisatschmelze vorteilhaft in der Mischzone einer selbstreinigenden Zweischneckenmaschine oder im Scherteil einer intensiv dispergierenden Schneckenmaschine durchgeführt wird, und
- der spezifische Energieeintrag 0,005 - 0,05 kWh/kg
- die Verweilzeit in der Mischzone 0,1 - 60 sec
beträgt.

4. Verfahren nach den Ansprüchen 1 bis 3, dadurch gekennzeichnet, daß das Stoffsystem selbstemulgierend ist.

5. Verfahren nach den Ansprüchen 1 bis 4, dadurch gekennzeichnet, daß die Stabilisierung der Sekundärdispersion durch die an der Oberfläche der Latexteilchen befindlichen Carboxylatgruppen erfolgt.

6. Verfahren nach den Ansprüchen 1 bis 5, dadurch gekennzeichnet, daß es sich bei den zu dispergierenden Polyacrylaten um Lösungscopolymerisate oder vorzugsweise um Mischungen zweier Lösungscopolymerisate handelt, wobei nur eines der beiden Copolymerisate Säuregruppen beziehungsweise Basegruppen enthält.
